# EUROPÄISCHE PATENTANMELDUNG

(11) **EP 1 060 656 A2**
(43) Veröffentlichungstag der Anmeldung: **20.12.2000**
(21) Anmeldenummer: 00112182.1
(22) Anmeldetag: 07.06.2000
(51) Int. Cl.: A01G 9/02

(54) **Pflanztopf**

(30) Priorität: 17.06.1999 DE 29910580 U
(71) Anmelder: fischerwerke Artur Fischer GmbH & Co. KG, 72178 Waldachtal (DE); Geigle Baumschulen GmbH, 72202 Nagold (DE)
(72) Erfinder: Herbstreit, Rolf, 72178 Waldachtal (DE); Moser, Karl-Heinz, 72202 Nagold (DE)

(57) **Zusammenfassung**

Die Erfindung betrifft einen Pflanztopf (10) mit einem Boden (12) und einer Mantelwand (14), wobei der Pflanztopf (10) mindestens eine Solltrennlinie (16) im Boden (12) und/oder in der Mantelwand (14) aufweist, an der der Pflanztopf (10) geöffnet werden kann. Damit wird erreicht, dass die Wurzeln bzw. der Wurzelballen der im Pflanztopf vorgezogenen Pflanze einen schnellen Kontakt mit dem umliegenden Erdreich nach dem Auspflanzen der Pflanze erhalten.

## Beschreibung

Die Erfindung betrifft einen Pflanztopf mit einem Boden und einer Mantelwand gemäß den Merkmalen des Oberbegriffs des Anspruchs 1. Mit Mantelwand ist beispielsweise eine Umfangswand eines runden oder sind Seitenwände eines eckigen Pflanztopfes gemeint.

Derartige Pflanztöpfe sind an sich bekannt. In ihnen werden Pflanzen vorgezogen, die später ausgepflanzt werden. Es ist bekannt, derartige Pflanztöpfe aus biologisch abbaubarem Material herzustellen, so dass die vorgezogenen Pflanzen beim Auspflanzen im Pflanztopf belassen, d. h. mit dem Pflanztopf ausgepflanzt werden können. Der Pflanztopf aus biologisch abbaubarem Material zersetzt sich, so dass Wurzeln der vorgezogenen Pflanze in umliegendes Erdreich auswurzeln können.

Von Nachteil ist, dass sich die bekannten Pflanztöpfe bereits während der Vorzucht mehr oder weniger stark zersetzen können, so dass der Pflanztopf beim Auspflanzen einen Wurzelballen der Pflanze nicht oder nicht ausreichend zusammenhält. Andererseits ist es möglich, dass der Pflanztopf beim Auspflanzen noch nahezu unzersetzt ist und sich nach dem Auspflanzen so langsam zersetzt, dass die Wurzeln der Pflanze nicht schnell genug mit dem umliegenden Erdreich in Kontakt kommen und die Pflanze eingeht. Das Problem wird noch dadurch verschärft, dass die Pflanzen nach unterschiedlich langer Vorzucht-Zeit ausgepflanzt werden, so dass ein Zersetzungsgrad des Pflanztopfes beim Auspflanzen vorher nicht bekannt ist. Weiteres Problem ist, dass der Zersetzungsprozess der Pflanztöpfe nach dem Auspflanzen unterschiedlich schnell vonstatten geht.

Der Erfindung liegt die Aufgabe zugrunde, einen Pflanztopf, der einen ausreichend schnellen Kontakt der Wurzeln bzw. des Wurzelballens einer im Pflanztopf vorgezogenen Pflanze mit dem umliegenden Erdreich nach dem Auspflanzen der Pflanze sicherstellt, vorzuschlagen.

Diese Aufgabe wird erfindungsgemäß durch die Merkmale des Anspruchs 1 gelöst. Der erfindungsgemäße Pflanztopf weist mindestens eine, vorzugsweise mehrere Solltrennlinien im Boden und/oder in der Mantelwand auf. Durch Auftrennen, beispielsweise Aufreißen des Pflanztopfes an der Solltrennlinie, wird der Pflanztopf vor dem Auspflanzen der vorgezogenen Pflanze geöffnet. Durch die aufgetrennte Solltrennlinie steht der Wurzelballen der im Pflanztopf vorgezogenen Pflanze sofort nach dem Auspflanzen mit dem umgebenden Erdreich in Kontakt. Wasser, Feuchtigkeit und Nährstoffe aus dem umgebenden Erdreich gelangen durch die aufgetrennte Solltrennlinie in den Pflanztopf. Zudem können die Wurzeln der im Pflanztopf vorgezogenen Pflanze durch die aufgetrennte Solltrennlinie in das umgebende Erdreich auswurzeln und werden nicht vom Pflanztopf behindert. Der erfindungsgemäße Pflanztopf hat den Vorteil, dass Wurzeln einer vorgezogenen Pflanze sofort nach dem Auspflanzen ausreichenden Kontakt mit dem umgebenden Erdreich haben, wodurch gute Bedingungen für ein Anwachsen der vorgezogenen Pflanze geschaffen sind.

In bevorzugter Ausgestaltung der Erfindung umschließt die Solltrennlinie einen Wand- und/oder Bodenabschnitt. Durch Heraustrennen des von der Solltrennlinie umschlossenen Wand- und/oder Bodenabschnitts ist eine flächige Öffnung im Pflanztopf herstellbar, die einen ausreichend großen Kontakt des Wurzelballens der Pflanze mit dem umgebenden Erdreich sicherstellt. Der von der Solltrennlinie umschlossene Wand- und/oder Bodenabschnitt kann vollständig vom Pflanztopf abgetrennt werden oder er kann stellenweise mit dem Pflanztopf verbunden bleiben und um Verbindungsstellen beispielsweise nach außen geknickt werden, um die Öffnung freizugeben.

Bei einer Ausgestaltung der Erfindung geht die Solltrennlinie von einer Wand- und/oder Bodendurchbrechung des Pflanztopfes aus. Eine solche Durchbrechung kann beispielsweise ein ohnedies vorhandenes Be- und Entwässerungsloch des Pflanztopfes sein.

Diese Ausgestaltung der Erfindung erleichtert das Auftrennen des Pflanztopfes entlang der Solltrennlinie.

Bei einer Ausgestaltung der Erfindung ist der Pflanztopf aus einem biologisch abbaubaren Material, insbesondere aus einem biologisch abbaubaren Kunststoff hergestellt. Derartige Materialien sind dem Fachmann bekannt, sie werden beispielsweise auf Basis von Maisstärke hergestellt.

Um den Pflanztopf leicht an der Solltrennlinie auftrennen zu können, wird bei Ausgestaltungen der Erfindung eine Geometrie des Pflanztopfs und/oder ein Verlauf der Solltrennlinie gewählt, der bei einem Druck auf den Pflanztopf von außen zu einer hohen Spannung im Pflanztopf an einem Punkt der Solltrennlinie führt, von dem ausgehend der Pflanztopf entlang der Solltrennlinie reißt. Zu diesem Zweck sieht eine Ausgestaltung der Erfindung vor, die Solltrennlinie von einer Ecke des Pflanztopfs ausgehend anzuordnen. Eine solche Ecke kann am Übergang von einer im Querschnitt beispielsweise drei- oder vierecksförmigen Rippe im Boden des Pflanztopfs zur Mantelwand gebildet sein. Eine andere Ausgestaltung der Erfindung sieht zwei Solltrennlinien vor, die schräg zueinander verlaufen und sich an einem gemeinsamen Punkt treffen. Besonders vorteilhaft ist die Kombinationen der beiden vorangehenden Ausgestaltungen der Erfindung, nämlich zwei Solltrennlinien von einer Ecke des Pflanztopfs ausgehend auszubilden, wobei die Ecke des Pflanztopfs den gemeinsamen Punkt bildet, an dem sich die beiden Solltrennlinien treffen.

Die Erfindung wird nachfolgend anhand eines in der Zeichnung dargestellten Ausführungsbeispiels näher erläutert. Die einzige Figur zeigt einen erfindungsgemäßen Pflanztopf in perspektivischer Darstellung.

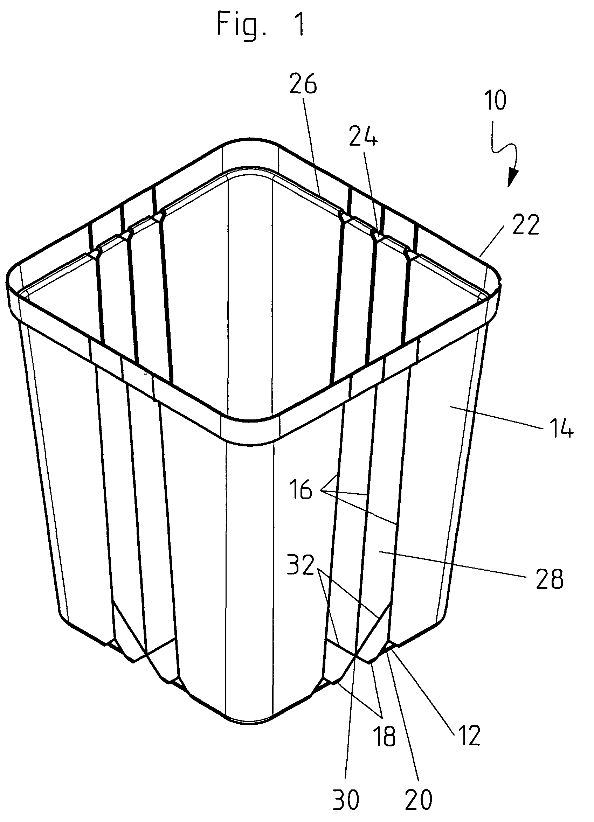

Der in Figur 1 dargestellte, erfindungsgemäße Pflanztopf 10 ist einstückig aus einem biologisch abbaubaren Kunststoff hergestellt. Der Pflanztopf 10 weist einen quadratischen Boden 12 mit gerundeten Ecken auf, von dem vier Seitenwände 14 nach oben stehen, die eine ebenfalls mit 14 bezeichnete Mantelwand bilden. Die Seitenwände 14 sind vom Boden 12 aus nach oben geringfügig schräg nach außen geneigt, um den Pflanztopf 10 stapeln zu können. Der Pflanztopf 10 hat Standardabmessungen und kann daher problemlos an vorhandenen Einrichtungen wie Topfmaschinen und Trays verwendet werden.

In jeder Seitenwand 14 weist der Pflanztopf 10 drei gerade Solltrennlinien 16 auf, die parallel zueinander in der Mitte der Seitenwände 14 senkrecht von unten nach oben verlaufend angeordnet sind. Die jeweils mittlere der drei Solltrennlinien 16 geht von einer dreiecksförmigen Rippe 18 des Bodens 12 aus, die beiden äußeren Solltrennlinien 16 beginnen an einer oberen Ecke eines dreieckförmigen Be- und Entwässerungslochs 20, das angrenzend an den Boden 12 in der Seitenwand 14 angebracht ist. Nach oben gehen die Solltrennlinien 16 bis zu einem freien, oberen Rand 22 des Pflanztopfs 10 durch, wobei die Solltrennlinien 16 von dreiecksförmigen Löchern 24 unterbrochen sind, die an einem Stapelbund 26 des Pflanztopfs 10 vorgesehen sind. Die Solltrennlinien 16 sind linienförmige Verdünnungen einer Wanddicke der Seitenwände (Mantelwand) 14 des Pflanztopfs 10, die ein Auftrennen des Pflanztopfs 10 durch Zerreißen der Seitenwände 14 entlang der Solltrennlinien 16 ermöglichen. Die Solltrennlinien 16 können beispielsweise auch als Perforationslinien ausgeführt sein.

Die drei zueinander parallelen, geraden Solltrennlinien 16 jeder Seitenwand 14 begrenzen zwei streifenförmige, senkrecht von unten nach oben verlaufende Wandabschnitte 28. Durch Zerreißen der Seitenwände 14 an den Solltrennlinien 16 lassen sich die Wandabschnitte 28 heraustrennen, so dass eine vom Boden 12 bis zum oberen Rand 22 durchgehende Öffnung in jeder Seitenwand 14 entsteht, deren Rand die Solltrennlinien 16 bilden. Der Planztopf 10 kann auch an der mittleren der drei Solltrennlinien 16 jeder Seitenwand 14 zerrissen und die beiden Wandabschnitte 28 um die äußeren Solltrennlinien 16 nach außen geknickt werden, um eine Öffnung in der Seitenwand 14 herzustellen.

Die Verwendung des erfindungsgemäßen Pflanztopfs 10 ist folgende: Im Pflanztopf 10 wird in an sich bekannter Weise eine nicht dargestellte Pflanze vorgezogen, die anschließend ausgepflanzt werden soll, ohne sie aus dem Pflanztopf 10 entnehmen zu müssen. Vor dem Auspflanzen wird der Pflanztopf 10 beispielsweise von Wand im Bereich der Solltrennlinien 16 zusammengedrückt, wodurch die Solltrennlinien 16 einreißen. Die von den Solltrennlinien 16 umrandeten Wandabschnitte 28 werden vollständig aus den Seitenwänden 14 herausgerissen oder nach außen geknickt. Dadurch wird in jeder Seitenwand 14 eine ausreichend große Öffnung geschaffen, um ein Anwachsen der Pflanze in dem den Pflanztopf 10 nach dem Auspflanzen umgebenden Erdreich zu gewährleisten. Die durch Abreißen der Wandabschnitte 28 geschaffenen Öffnungen stellen einen Kontakt eines Wurzelballens der im Pflanztopf 10 vorgezogenen Pflanze mit dem umgebenden Erdreich sicher und ermöglichen ein problemloses Auswurzeln der Pflanze in das umgebende Erdreich, auch wenn sich der aus biologisch abbaubarem Material bestehende Pflanztopf 10 noch nicht zersetzt hat.

Am Übergang von der Rippe 18 im Boden 12 zur Seitenwand 14 bildet der Pflanztopf 10 eine Ecke 30. Wird beispielsweise mit einer Hand ein Druck von außen auf den Pflanztopf 10 ausgeübt, um diesen an den Solltrennlinien 16 einzureißen, ist die durch den Druck auf den Pflanztopf 10 bewirkte Spannung an dieser Ecke 30 ebenso wie an den Ecken der dreiecksförmigen Be- und Entwässerungslöcher 20 besonders hoch. Die Solltrennlinien 16 reißen daher an der Ecke 30 und den Ecken der Entwässerungslöcher 20 beginnend ein. Des Weiteren sind zwei kurze, linienförmige Solltrennlinien 32 vorgesehen, die nahe dem Boden 12 von den äußeren beiden der drei Solltrennlinien 16 in jeder Seitenwand 14 des Pflanztopfs 10 schräg abzweigen. Diese beiden kurzen Solltrennlinien 32 treffen an einem gemeinsamen Punkt, nämlich der von den Rippen 18 gebildeten Ecke 30 des Pflanztopfs 10 aufeinander, um das Einreißen der Solltrennlinien 16, 32 weiter zu erleichtern.

## Patentansprüche

1. Pflanztopf mit einem Boden und einer Mantelwand, **dadurch gekennzeichnet,** dass der Pflanztopf (10) mindestens eine Solltrennlinie (16) im Boden (12) und/oder in der Mantelwand (14) aufweist, an der der Pflanztopf (10) geöffnet werden kann.

2. Pflanztopf nach Anspruch 1, **dadurch gekennzeichnet,** dass die Solltrennlinie (16) einen Rand einer Öffnung bildet, die durch Abtrennen eines von der Soll-trennlinie (16) berandeten Wand- und/oder Bodenabschnitts (28) aufreißbar ist.

3. Pflanztopf nach Anspruch 1, **dadurch gekennzeichnet,** dass der Pflanztopf (10) eine Wand- und/oder Bodendurchbrechung (20, 24) aufweist, von welcher die Solltrennlinie (16) ausgeht.

4. Pflanztopf nach Anspruch 1, **dadurch gekennzeichnet,** dass der Pflanztopf (10) eine Ecke (30) aufweist, von welcher die Solltrennlinie (16) ausgeht.

5. Pflanztopf nach Anspruch 1, **dadurch gekennzeichnet,** dass der Pflanztopf (10) zwei Solltrennlinien (32) aufweist, die sich an einem gemeinsamen Punkt treffen.

6. Pflanztopf nach Anspruch 4 und 5, **dadurch gekennzeichnet,** dass der gemeinsame Punkt, an welchem die beiden Solltrennlinien (32) sich treffen, die Ecke (30) des Pflanztopfs (10) ist.

7. Pflanztopf nach Anspruch 1, **dadurch gekennzeichnet,** dass der Pflanztopf (10) aus einem biologisch abbaubaren Material besteht.
